# EUROPEAN PATENT SPECIFICATION

(11) **EP 3 289 240 B1**
(45) Date of publication and mention of the grant of the patent: **25.11.2020**
(21) Application number: 16727540.3
(22) Date of filing: 29.04.2016
(51) Int. Cl.: F16G 13/16, H02G 11/00

(54) **SEPARATOR SYSTEM FOR STEEL ENERGY CHAINS AND CHAIN LINK THEREOF**
TRENNSYSTEM FÜR STAHLENERGIEKETTEN UND KETTENGLIED DAFÜR
SYSTÈME DE SÉPARATEUR POUR CHAÎNES D'ÉNERGIE EN ACIER ET SON MAILLON DE CHAÎNE

(30) Priority: 30.04.2015 IT MI20150615
(43) Date of publication of application: 07.03.2018
(73) Proprietor: Findalto S.r.l., 20090 Monza (IT)
(72) Inventor: MAURI, Giovanni, IT-20900 Monza (IT)
(74) Representative: Riccardi, Sergio
(86) International application number: PCT/IB2016/000599
(87) International publication number: WO 2016/174518

(56) References cited:
- EP-A1- 0 794 354
- WO-A1-2012/116919
- DE-A1-102009 030 798
- DE-U1- 9 109 241
- DE-U1-202012 003 945
- US-A1- 2014 083 075
- US-A1- 2014 096 499

## Description

The present invention relates to the field of cable holding chains, more particularly steel energy chains. It is well known in this field that the steel chains may be used in a plurality of technical sectors, according to the operative mode, the size of the chain links and many other factors.

In any case the steel chains are generally very sturdy structures adapted to be used with heavy mechanical loads. These chains are generally structures with a not negligible weight, so they generally have great self-bearing features, should withstand sudden changes in temperature and be adapted to be used in difficult environments and even outdoors.

The persons skilled in this art know that these energy chains may be used also on oil rigs, drilling and machining platforms, overhead ducts, robotized systems of any kind; said chains are frequently located in very hard or diversified environments, according to the overall size of the chain, more particularly dictated by the size, shape and structure of the chain links.

The present invention may be applied with particular utility also in the field of offshore rigs. It is known that the main object of the steel energy chains is to convey and protect pipes, hoses and cables which are quite long, very heavy and decidedly expensive in this sector. It is also known that the final assembly of the finished and operative system including the steel energy chain with the enclosed required cables, hoses and pipes of different sizes, is a long, complex and highly delicate operation. In addition, since they should be working in specific extreme environments, undergoing continuous stress, they must be subject to special checks in order to avoid as much as possible failures and other malfunctioning events.

In order to hold said cable, hoses and/or pipes in their correct position, more particularly for the steel chains adapted to carry and convey very heavy items, it is necessary to provide inside said chains a plurality of spacers allowing to keep the enclosed cables, hoses and/or pipes in their correct mutual position.

Enterprises in this technical field are mainly interested in steel chains combining characteristics of sturdiness and long life of at least 15 years, an optimal quality/price ratio also achieved by design optimization and standardization, the maximum possible sturdiness/weight ratio and more particularly the possibility of reducing the sliding friction between said cables, pipes and/or hoses and said separator elements; this is frequently achieved by creating a rolling friction. Another felt problem is to make the operations of installing and maintaining said chains as easier and quicker as possible. Thus the present invention concerns more particularly a system separating and keeping in the correct position said cables, pipes and/or hoses.

Separator systems for steel chains of medium and big size are known, generally installed in individual or multiple arrangement inside the chain link, said link generally comprising two side members and at least two horizontal studs connecting the side members; said separator elements may thus be disposed in a horizontal and/or vertical position relative to said studs, according to the various embodiments of the chain.

Said separator elements are rather frequently custom made for specific (standard or special) diameters of the cables, pipes and/or hoses to be held inside the chain, and installed every one, two or more chain link according to the user's requirements.

Said separator elements in some embodiments may be movable inside the stud, for instance sliding laterally to match the longitudinal section (relative to a front view of an individual link) with the diameter of the cables, pipes and/or hoses.

In addition, said separator elements are generally independent from one another, in both the horizontal or vertical arrangement; this is an advantage as to the extraction of a single separator element, but reduces considerably the structural stability of the system, because each independently acting element does not contribute to improve the total structural stability of the system.

In this connection document DE 10 2009 030798 A1 discloses a system in which to install the horizontal separators, the user should remove one of the two side members of the link and insert each horizontal separator in a proper hole made in each vertical separator; therefore such a technical solution provides for the complete link disassembly and does not allow an easy removal of the horizontal separators with the assembled and loaded link, and moreover to remove at least one horizontal separator the user should previously remove at least the upper stud and one of the two side members, thus at least two pieces of the system.

In addition, document DE 2262018 A1 discloses a system in which each vertical separator is individually fastened by screws and bolts, thus requiring to be individually unscrewed, operation that results to be difficult when the link is assembled and loaded with cables and pipes.

It is also clear that in both the cited prior art documents, removal of one or more horizontal separators is not independent from the removal of one or more vertical separators, when both horizontal and vertical separators are installed on the same chain link.

The possibility of having easily removable separator elements when the chain loaded with pipes and cables is operative, is one of the most critical problems in the field of steel chains, since failure of cables, pipes or hoses inside the chain is a frequent event, in view of the high number of cycles carried out by the chain.

Thus it is necessary to be able to act in time for replacing or repairing entire cables or pipes or portions thereof, when it is possible to have an easy access to the item to be serviced or replaced without being obliged to disassemble the entire chain system, an operation clearly inconceivable as to costs, structures and labor required for such an action, as well as time and consequent economic loss caused by stop of the production, for instance of an oil rig. Thus it is clear that this aspect with related technical problem is particularly felt for steel chain of medium or high output and above all in the sector of offshore rigs.

With regard to the separator systems providing for the greatest freedom of motion and extraction of the known separator elements, there are separator systems comprising studs and horizontal and vertical separators included in the link consisting of two side members and upper and lower studs closing the chain link; at every one or two links of such a chain, in a particular innovative known embodiment, horizontal and/or vertical separators in the form of solid steel crossbars are individually fixed to the link side members and upper/lower studs, respectively.

It is to be noted that the above solution should already be considered advantageous, since most separator systems for cable and/or tube bundles of steel chains still nowadays are generally fixed non-detachable separators or in the most favorable case systems comprising said solid steel crossbars that can rotate but still remain fixed, at least as to the horizontal separators. Therefore a system comprising horizontal and/or vertical separators is to be considered the closest prior art of interest for the present invention.

Both the above mentioned horizontal separators and the vertical separators are fixed for a system stability by means of proper screws of suitable size on the outer and inner side, at both side members of the chain link for the horizontal separators, or on said upper and lower stud for the vertical separators, which are fixed by means of a pair of screws arranged outside the chain sectional area, namely outside in order not to be in the way or hinder the arrangement of the bundles of cables, pipes and/or hoses. As to the horizontal separators, it is known that said steel chains are generally or almost always arranged in proper guides keeping said chain in the correct sliding line. These guides obviously comprise elements to keep said chain axially aligned also sideways, so that in case of disassembling one or some of said elements, it is often impossible to have access to the corresponding screw or fastener. The details may be seen in the annexed drawings. It is to be noted that in case of failure or malfunction of one or more cables, pipes or hoses, it is frequently impossible to move the chain from the position where it was stopped, so that the access to remove the horizontal separator may be very difficult. In addition with regard to the horizontal separators, when said chain is a part of a system of several chains juxtaposed side by side, the access to the disassembling item of the horizontal separators at the link side is still more difficult when said link is in lateral contact with both the guide and another link. For a technician in this sector it will be quite clear that in this case the operations of disassembling the separator become still more complex and long, sometimes even more dangerous for the operators, and also more expensive in terms of both servicing time and costs as well as time and costs of lost use of said chain.

It is to be noted that in the operative condition the chain generally works in a folded state; therefore in case of failure and removal of the vertical separators, which are also fixed and detachable by means of screws and the like from the upper and lower stud, it is necessary to have access to the outer sides of said studs in order to disassemble the fasteners of said vertical separators. It appears that, if it is not possible to move the chain, it will be very difficult or even impossible detach the vertical separator if the item to be disassembled is on the folded inner side of the chain, both upwards and downwards.

Therefore it is clear that said separators have many difficulties to be actually removed, thus making quite small or even vain the objects of simplicity of extraction which were conceived for. Moreover, it is to be noted that each separator is constrained through additional fastening means, which to be positioned require that both the chain links and the studs must be drilled. These holes are regions of additional stress inside the assembled chain and subject to wear and corrosion. In any case said holes in the chain link and in the stud result to be a disadvantageous factor for duration with time and strength of said elements, which in view of their high cost generally require a long life guarantee at least of about 15 years.

In addition, said fastening means may easily fall down during the disassembling operations, causing troubles by getting lost or captured by gears of the chain, where they could cause serious damages.

Further elements will be described in the accompanying drawings, and in any case a main object of the present invention is a system of separators for steel chains which is extremely versatile in both positioning and removing the elements of the system.

Another object of the present invention is to provide for a separator system for steel chains allowing to interact in the system for moving and removing said cables and/or tubes in the easiest way.

It is a further object of the present invention to provide for a separator system adapted to support said cables and/or tubes both vertically and horizontally, operating in both disjoined and integrated mode.

It is a still additional object of the present invention to provide for a separator system which is extremely simple and immediate in both assembling and disassembling stages.

Furthermore it is an important object of the present invention to simplify said assembling and disassembling operations of said separator elements, also to reduce the times of technical maintenance of said chains.

It is also an object of the present invention to provide for a system of horizontal and vertical independent separators.

Another important object of the present invention is to provide for separators allowing to reduce the weight of the chain as a whole.

Still an object of the present invention is to provide for a system that does not include parts that may be lost or causes damages to said chain.

It is also an object of the present invention to provide for a system taking care of the structure of said chain (e.g. without drilling it and so on) in order to optimize the duration and life time of the chain.

At last it is also an object of the present invention to provide for a system of horizontal and/or vertical separators, optimizing the quality/price ratio of the chain/separators assembly.

A final object of the present invention is to provide for a system of separators that may be easily replaced individually in case of failure or malfunction of elements of the system.

These and other objects will be implemented by the innovative system of separators for steel chains comprising at least one or a plurality of horizontal separators and at least one or a plurality of vertical separators, said horizontal and vertical separators being mutually independent and adapted to be wholly disassembled from said steel chain link. More particularly are inserted advantageously constrained in chain seats made in the inner radius of the chain and may be fixed or fastened in said seats by holding means such as levers and the like, integral with said fastening system disposed in the inner radius of the chain.

Said separator elements have preferably a cylindrical shape and are hollow to reduce the friction of said cables disposed in said separator system and to make lighter the chain structure.

As above said, said system comprises horizontal separators adapted to be individually disassembled and taken out on both fastening sides, advantageously acting in the inner radius of the chain.

Said system also comprises vertical separators which are constrained through special guides to said side members of the chain links and may be advantageously disassembled by extraction from the external face of the chain link. These vertical separators do not require additional fastening means and are constrained in situ through a proper counteracting member preventing them to come out from said guide or profile designed for their seat.

These and other advantages of the separator system for steel chains of the present invention will be further illustrated by the description of the accompanying drawings showing a particularly preferred embodiment of said system with horizontal and vertical separators of the invention, in which:
Figure 1a shows an example of the cited prior art;
Figure 1b shows a detail of the prior art chain of Figure 1a;
Figure 2 shows a preferred embodiment of the separator system of the present invention in its finished assembled form;
Figure 3a shows a detail of the releasing or locking system for the horizontal separators;
Figure 3b shows the detail of Figure 3a in the release stage of the horizontal separators; and
Figure 4 is an exploded top view with the detail of the vertical separators of the present invention.

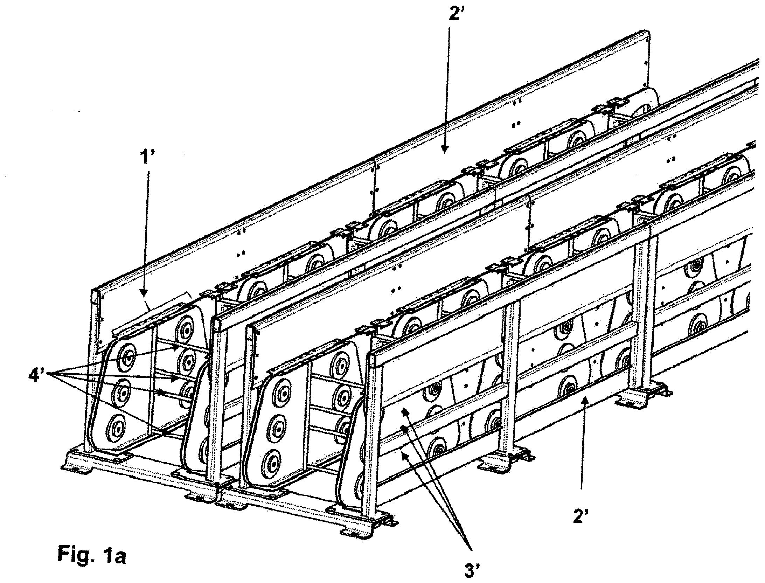

With reference now to Figure 1a, a cable holding chain consisting of chain links 1' is illustrated, where said chain is disposed in a guide 2' as described in the previous illustration of prior art. In this drawing one can see on said chain links lateral holes with related fastening means 3', which are the seats of fastening means for said horizontal separators 4'. These separators 4' are fixed through screws, bolts or other suitable means, on the outer side of said chain link, so that for each separator at least two through holes should be made in the link, and these holes have the drawback of creating points of possible wear and rust, in any case weakening in the long run the link structure. This is a negative factor, since these steel cable holding chains are generally very expensive and a guarantee of the longest possible life time in the best conditions is usually requested. Moreover, as already pointed out in the foregoing, said horizontal separators 4' to be removed must be disassembled from both sides of the chain link, acting on the external side of the link. Therefore when said chain as shown is arranged in a guide channel 2' or is even juxtaposed with other chains, it is at once clear that it is very difficult to reach the wanted point of release for each horizontal separator 4', on the external side because of possible parts of guide 2' preventing or complicating the access, and on the side in contact with other parallel chains because the chain links are very close to each other, besides the presence of guide 2'. The separators are then extracted from the inner radius, once externally disengaged.

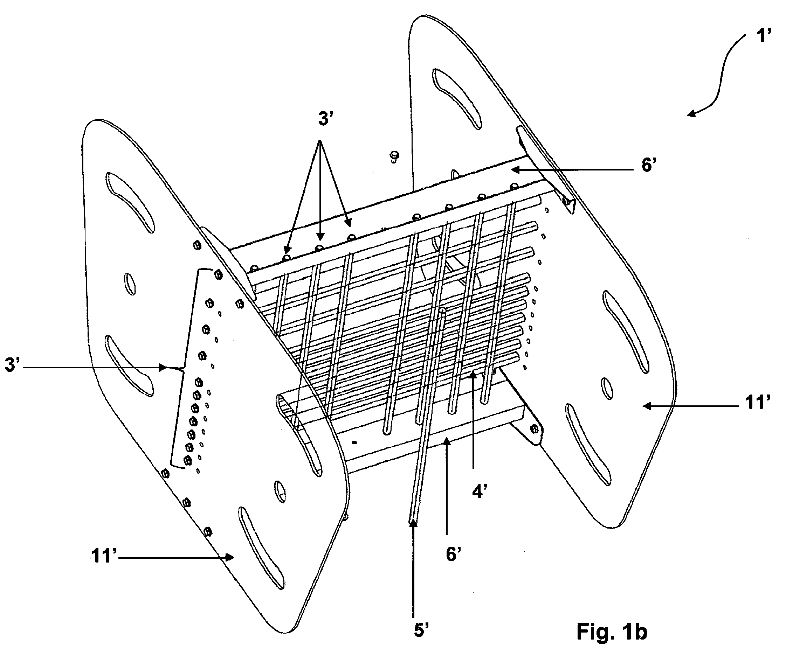

In addition, it should be noted in both figures 1a and 1b, that said horizontal separators 4' (but also said vertical separators 5') to be fixed require proper means such as screws or bolts, which should be in pairs for each separator. It is known in the sector of steel chains, being devices of certainly considerable size and weight, with particular emphasis on chains for offshore rigs, that the problem of accident prevention; indeed for example work on oil rigs or other structures of particularly big size, involve contact of operators with mechanical and other parts of considerable size, so that any part that may fall down or get lost is undesiderable or even not permitted by any safety rule. Therefore it is immediately clear, in particular also from Figure 1b, that movable parts subject to fall down are in great numbers, with particular emphasis on screws and/or bolts 3' which may even have considerable size, and in any case they could end in a particular disadvantageous way within the chain links or any other mechanism, even causing serious damages and/or injuries.

Now with more detailed reference to the vertical separators 5', the ends of these separators are received in the upper and lower studs or crossbars 6' forming the chain link 1' together with the two link side members 11'. Thus it is first of all clear that for receiving said vertical separators 5', both said upper and lower studs must be provided with holes to insert fastening means 3' on both upper and lower side, involving again for the studs the same problems of structural weakening above discussed for the chain links. Moreover also in this case, to remove said vertical separators, it is necessary to disengage their both ends, in order to extract them from the internal area of the chain. In a normal work condition of the chain, said chain is partially arranged in guide 2' and partially sliding folded on itself, so that in case of malfunction or failure of tubes or cables, it is generally advisable not to move the chain from the position in which it was stopped when the event was noticed, so that it occurs quite frequently that one of the two sides of disengagement of the fastening means 3' of said vertical separators 5' disposed on said upper and lower studs 6', are hardly accessible if they are located on the lower stretch of the chain with the upper side in contact with the lower side of the upper stretch of the same chain. In addition, also in this case for each separator at least two fastening means 3' are provided, which as above said may fall down, get lost and cause damages to parts, persons or said chain.

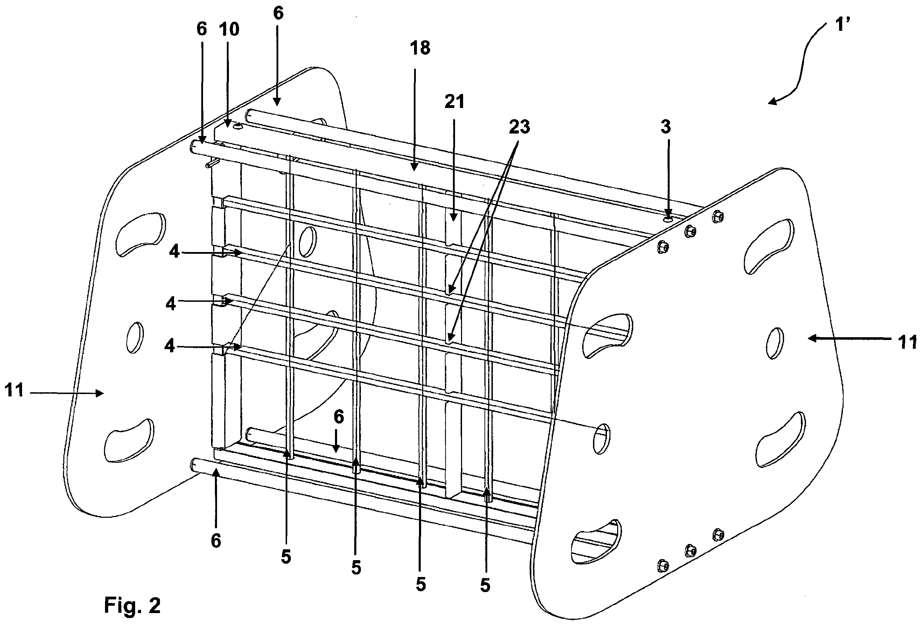

Figure 2 shows a particularly preferred embodiment of the system of horizontal and vertical separators for steel chains according to the present invention, wherein the system is assembled on a steel chain. A chain link 1 comprises, besides two side members 11 forming the chain together with the upper and lower studs or crossbars 6, horizontal separators 4 and vertical separators 5. It has to be particularly noted that, in this embodiment, there are two upper and two lower studs 6, and said vertical separators 5 are constrained at the upper and lower end to an additional support or guide 10 dedicated to receive said vertical separators 5. This allows to make the separators 5 advantageously independent from the studs 6, so that it is possible to disassemble the separators 5 without drilling and then detaching the studs 6 for the insertion and subsequent removal of the separators 5, respectively, to the advantage of the structural strength of said studs 6 and consequently of the chain link 1. Moreover in this way the studs may be spaced inside the chain radius, thus allowing advantageously to stiffen and make stronger the chain.

In a further advantageous way the holes for receiving the fastening means 3 for said studs and for housing the guide 10 for said vertical separators 5, are the only holes to be made in the side members 11 of the chain. Moreover, said studs 6 and guide 10 should not be disassembled to remove the separators 5; therefore one can note that the number of holes made in the link is drastically reduced, which goes to the full advantage of the structural strength and durability of the chain links.

In addition, since said fastening means 3 are generally elements not requiring detachment, the risk is strongly reduced that parts may fall down causing damages to parts and persons, to the full advantage of safety. In a particularly advantageous way, it is to be pointed out that the two side members of the link are totally devoid of any other perforation.

It is also to be noted that said separators in a preferred embodiment of the invention are hollow steel rods, so that the total weight of the chain advantageously results to be decidedly reduced. In order to solve the problem of resistance to the weight of very heavy cables, pipes and/or hoses, a central vertical support bar or guide 21 was inserted and fully fixed to said guide 10. Said central support bar 21 is adapted to keep a vertical structural stability of the link and also to receive and support the horizontal separators 4 in proper cuts or seats 23 provided at the points of passage of said separators, to increase their resistance to stress

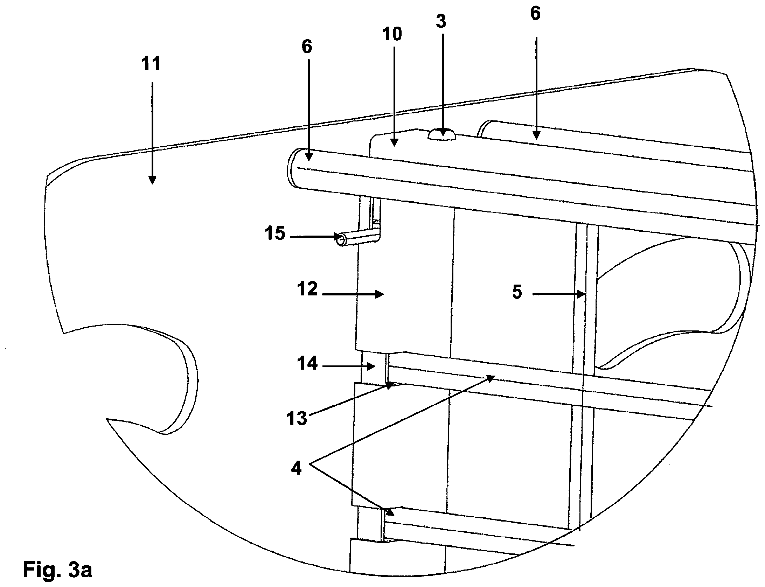

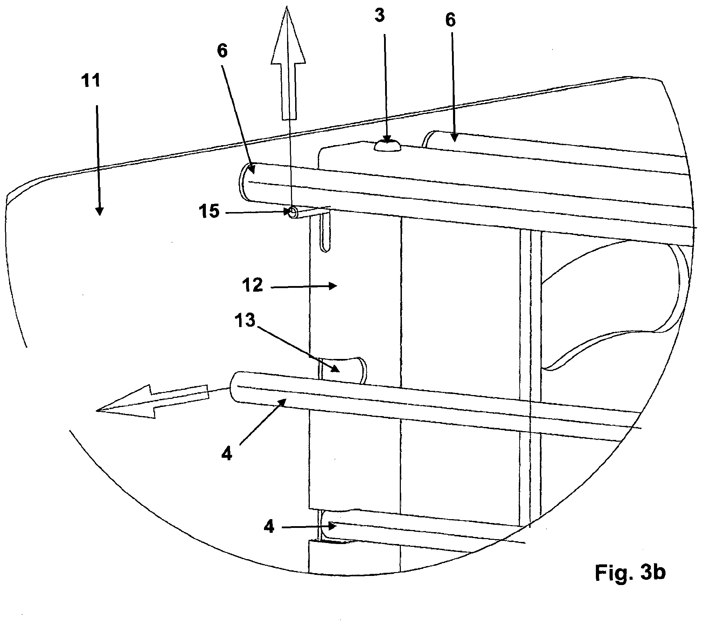

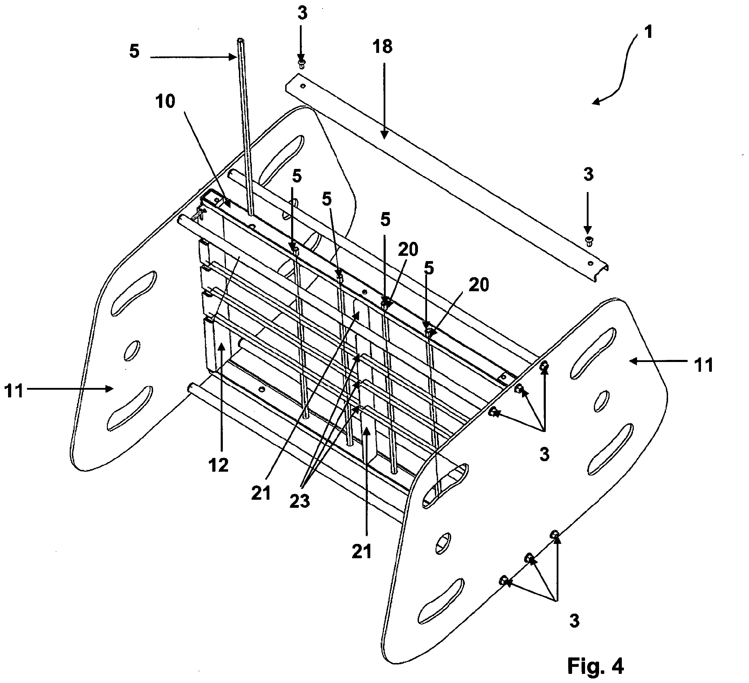

With regard now to the horizontal separators 4 (the vertical separators will be discussed in detail hereinafter with reference to figure 4), referring to figures 2, 3a and 3b, they are constrained by blocking means 14, 12, and more particularly they are arranged in a blocking device 12 coupled and constrained with the side members 11 of the chain link, like for instance in the present embodiment, comprising seats/notches 13 to receive the terminal portions of said horizontal separators 4. Each blocking device 12 also comprises blocking means 14 adapted to slide inside the blocking device 12, in order to allow removal and installation of said separators in seats 13. Said blocking means 14 may be, like in the present embodiment, flaps or straps 14 of steel or other suitable material, sliding in a guide provided in said blocking device 12. In the blocked position of the horizontal separator, as seen in figure 3a, said straps close each end of said horizontal separator 4 in said seat 13, preventing that said separator may come out from said seat 13. In this position of figure 3a, a trigger 15 constrained with said straps 14 is in its locking position; said trigger 15 may be constrained or made integral with said straps 14, and said straps 14 may be constrained to each other to be actuated by said trigger 15 or made like one single strap 14 and so forth. In figure 3b said trigger 15 is shown in the release position, as indicated by the relevant arrows; in this release position said trigger 15 constrained with said straps 14, when it moves, also moves said straps 14 from the locking position of said horizontal separator 4, so that the seat 13 is now open, and the corresponding separator may be removed from the corresponding seat 13 on the side in which said block was removed. Subsequently, to wholly remove the separator 4 from the relevant seat, the same operation is carried out for the blocking device 12 specularly present on the opposite side of the relevant link.

It is to be noted that, in a particularly advantageous way, the same trigger 15 in the present embodiment opens all the seats 13 of the corresponding side, so that by one single easy operation, it is possible to disengage any separator 4 from the relevant seat 13, and in a still more advantageous way, since the second blocking seat on the opposite link side is still closed, there is the protection against the risk that said separators may fall down.

Moreover, in a particularly advantageous way, said blocking systems 12 comprising the above described means, as well as the trigger 15, are disposed advantageously inside the chain radius, and this solves the above mentioned problems of access to release of said separators, because the inner side of said chain radius, in view of the size of said steel chains, can always be reached in a relatively easy and quick way. In addition, said system 12 results structurally very stable, thus increasing the reliability of the correct position of said separators 4. In a further embodiment, it is also possible, according to the needs, to provide a locking member for said trigger 15, for instance an opposite trigger or member with a similar function (not shown) so that said trigger 15 cannot be actuated by mistake.

At last figure 4 shows the system of horizontal and vertical separators in a partially exploded top view of the vertical separators 5, which are held in their seat by said support 10 constrained in the inner chain radius for housing the separators. Said upper and lower supports 10 are provided with through holes 20 to receive the terminal ends of said vertical separators 5. Moreover said support 10 on the outer side is closed relative to the chain radius by blocking means 18, 3 including a shaped profile 18, for instance a steel C-shaped profile or cover 18 fixed to said support 10 only by two fastening means 3, for example disposed on the outer side of said support 10. In this way the fastening means 3, such as screws, bolts or other suitable parts, are directly fixed on said support 10 designed for receiving said vertical separators 5, so that said through holes 20 and fastening means do not weaken in any way the structure of the chain link. Moreover there are only two fastening means 3 for each support, thus reducing drastically the number of fastening means required for fixing said separators. It is also to be noted that even in this case, said profile might be provided with a fixed joint or held in its seat through means integral with one part of the chain link, thus reducing further the number of parts that may get lost or fall down.

Therefore these vertical separators 5 may advantageously be extracted from the chain outer side; indeed once the fastening means 3 for the profile 18 are removed, said profile can be removed and each vertical separator may be simply withdrawn from the corresponding seat. A man skilled in this art may immediately recognize how simple is the removal of said separators, and the fact that this separator system, though disjoined, has intrinsic characteristics of structural reinforcement of the chain link, having indeed greatly reduced the drilling points of the link, by the insertion of the support 10 jointly with the link studs, and of the support 12 including the blocking system for the horizontal separators, to the advantage of simplicity of the separator system, simplified accessibility and greater resistance and durability of the chain link, and increased safety because of the mentioned reduction of the number of loose parts. Again in a further advantageous way, to remove said vertical separators it is sufficient to open only one side of said support and withdraw the corresponding vertical separator 5 with extreme ease.

Thus it is clear that said blocking means 12, 14 are so configured that the movement of just one element 14 potentially allows the contemporaneous removal of all horizontal separators 4 from the inner side of the chain, and said blocking means 18, 3 are so configured that the removal of just one element 18 potentially allows the contemporaneous removal of all vertical separators 5, when the chain is already assembled, provided with cables, pipes and /or hoses and operative, moreover with the advantage that removal of one or more horizontal separators 4 is independent from removal of one or more vertical separators 5, when both horizontal and vertical separators are provided on the same chain.

It is immediately clear that the foregoing innovative separator system is very simple to be used, extremely accessible, economical and performing, besides solving all the mentioned problems of the prior art systems.

It is finally to be pointed out that, even if said horizontal and vertical separators are integrated and may be complementary in the same separator system where they work together, said separators and related devices should also be considered innovative even when a system is being used, only including either horizontal or vertical separators.

The foregoing are only some possible embodiments of the innovative separator system for steel cable holding chains of the present invention, and it has to be noted that any variation concerning materials, their alloys and combinations suitable for the intended object, variations of shape, size, diameter and section of the separators, as well as of the related elements such as guides, triggers, straps and other fastening, holding or sealing members, may be modified and adapted to the object of the present invention or the required working conditions, and the embodiments of said links, side members and studs may be of any kind, the foregoing being only an illustrative non limiting example, the number and mode of fastening means may be varied or even omitted or made integral one piece in some embodiments of the separator system, still falling within the scope of protection of the present invention, as defined in the appended claims.

## Claims

1. A separator system for steel chain links of steel energy chains wherein said steel chain links (1) include at least two side members (11), at least one upper and one lower stud (6), said separator system comprising at least two horizontal separators (4) and at least two vertical separators (5) mutually independent, means (12, 14) for blocking said horizontal separators (4) to said chain link (1) and means (18, 3) for blocking said vertical separators (5) to said chain link (1), **characterized in that** said blocking means (12,14) are so configured that the movement of only one element (14) allows the contemporaneous removal of all said horizontal separators (4) from the inner side of the chain, and said blocking means (18, 3) are so configured that the removal of only one element (18) allows the contemporaneous removal of all said vertical separators (5), when the chain is operative with enclosed cables, pipes and/or hoses.

2. The separator system of claim 1, wherein the removal of one or more horizontal separator (4) is independent from the removal of one or more vertical separators (5).

3. The separator system of claims 1 and 2, wherein said studs (6) comprise at least two upper studs and at least two lower studs, and said vertical separators (5) are constrained with an additional support (10) dedicated to hold said vertical separators (5) in order to make these separators independent from the studs (6).

4. The separator system of claim 3, wherein said vertical separators (5) are held at their both ends in upper and lower supports (10), constrained on the inner side of said chain link (1) and arranged parallel to the orientation of the studs (6), said supports (10) comprising through holes (20) for insertion of said vertical separators (5) and a shaped profile (18) closing the top and bottom sides of said supports (10) by means of locking means (3) on the outer radius of the chain.

5. The separator system of claim 4, wherein said vertical separators (5) are extracted from the outer side of said chain link (1) by opening only one of said supports (10) and removing said shaped profile (18) which acts as a cover for said supports (10).

6. The separator system of claim 1 and 2, wherein said horizontal separators (4) and said vertical separators (5) have a cylindrical hollow form.

7. The separator system of the preceding claims, comprising a support bar (21) engaged with said upper and lower supports (10) and comprising seats (23) for the insertion and structural support of said horizontal separators (4).

8. The separator system of the preceding claims, wherein said blocking means (14, 12) comprise at least a strap (14) sliding inside a corresponding locking device (12), said strap (14) being in turn constrained to a release member (15) consisting of a trigger (15) closing all the seats (13) of said locking device (12), said seats (13) being configured for receiving the ends of said horizontal separators (4).

9. The separator system of claim 1, wherein said horizontal separators (4) and said vertical separators (5) are inserted together acting as a complementary system in said chain links (1).

10. An energy chain link (1) provided with a separator system according to one or more claims 1 to 8, comprising at least two side members (11), **characterized in that** said link (1) comprises at least two upper studs (6) and at least two lower studs (6) for stabilizing the structure of said link (1).

11. The energy chain link (1) according to claim 10, wherein said upper and lower studs (6) are disposed at the sides of said supports (10) adapted to hold said vertical separators (5).

## Patentansprüche

1. Trennsystem für Stahlkettenglieder von Stahlenergieketten, worin die Stahlkettenglieder (1) mindestens zwei Seitenkettenglieder (11), und mindestens eine obere bzw. untere Traverse (6) aufweisen, und das Trennsystem mindestens zwei senkrechte (5) und zwei waagerechte (4) einander unabhängige Trennelemente, sowie Sperrungsmittel (12, 14) für die besagten waagerechten Trennelemente (4) bzw. Sperrungsmittel (18, 3) für die besagten senkrechten Trennelemente (5) gegenüber dem Kettenglied (1) enthält, **dadurch gekennzeichnet, dass** die besagten Sperrungsmittel (12, 14) derart ausgebildet werden, dass die Verschiebung eines einzigen Sperrungsmittels (14) die gleichzeitige Entfernung aller waagerechten Trennelemente (4) aus der Innenseite der Kette gestattet, und die besagten Sperrungsmittel (18, 3) derart ausgebildet werden, dass die Verschiebung eines einzigen Sperrungsmittels (18) die gleizeitige Entfernung aller senkrechten Trennelemente (5), als die Leitungen, Röhren bzw. Schläuche enthaltende Energiekette verwendet wird.

2. Trennsystem nach Anspruch 1, worin die Entfernung eines bzw. mehrerer waagerechten Trennelemente (4) von der Entfernung eines bzw. mehrerer senkrechte Trennelemente (5) unabhängig ist.

3. Trennsystem nach Ansprüchen 1 bzw. 2, worin die Traversen (6) mindestens zwei oberen Traversen und mindestens zwei unteren Traversen aufweisen, und die senkrechten Trennelemente (5) mit einem weiteren Halterung (10) gebunden sind, wobei diese Halterung (10) die senkrechten Trennelemente (5) derart stützt, um diese Trennelemente von den Traversen (6) unabhängig zu machen.

4. Trennsystem nach Anspruch 3, worin die senkrechten Trennelemente (5) an seinen Enden mit oberen bzw. unteren Halterungen (10) gestützt werden, wobei diese Halterungen an der Innenseite des Kettenglieds (1) gebunden und parallel der Ausrichtung der Traversen (6) angeordnet werden, wobei diese Halterungen (10) Durchgangsbohrungen (20) für das Einsetzen der senkrechten Trennelemente (5) und eine geformtes Profil (18) aufweisen, und das Profil die oberen bzw. unteren Seiten der Halterungen (10) durch Schlussmittel (3) am äußeren Kettenradius schließt.

5. Trennsystem nach Anspruch 4, worin die senkrechten Trennelemente (5) aus der äußeren Seite des Kettenglieds (1) entfernt werden, indem nur eine einzige Halterung (10) geöffnet wird, und das als Deckel für die Halterungen (10) dienendes, geformtes Profil (18) entfernt wird.

6. Trennsystem nach Anspruch 1 und 2, worin die waagerechten Trennelemente (4) und die senkrechten Trennelemente (5) eine zylindrische und hohle Gestaltung aufweisen.

7. Trennsystem nach den vorhergehenden Ansprüchen, enthaltend eine mit den unteren bzw. oberen Halterungen (10) gebundenen Stützungsstange (21), die Sitze (23) für das Einstecken und die strukturelle Stützung der waagerechten Trennelemente (4) enthält.

8. Trennsystem nach den vorhergehenden Ansprüchen, worin die Sperrungsmittel (14, 12) mindestens ein innerhalb einer entsprechenden Sperrvorrichtung (12) laufendes Band (14), das seinerseits mit einer Löseneinrichtung (15) verbunden wird, wobei die Löseneinrichtung (15) aus einem Hebel (15), der alle die Sitze (13) der Sperrvorrichtung (12) schließt, und die Sitze (13) derart ausgebildet werden, um die Ende der waagerechten Trennelemente (4) zu lagern.

9. Trennsystem nach Anspruch 1, worin die waagerechten Trennelemente (4) und die senkrechten Trennelemente (5) zusammen in die Kettenglieder (1) gesteckt werden, indem sie als komplementäres System einwirken.

10. Energiekettenglied (1) mit einem Trennsystem nach einem bzw. mehreren Ansprüchen 1 - 8, mit mindestens zwei Seitenkettengliedern (11), **dadurch gekennzeichnet, dass** das Kettenglied (1) mindestens zwei oberen Traversen (6) und mindestens zwei unteren Traversen (6) aufweist, um die Struktur des Kettenglieds (1) zu stabilisieren.

11. Energiekettenglied (1) nach Anspruch 10, worin die oberen bzw. unteren Traversen (6) an den Seiten der Halterungen (10) angeordnet werden, um die senkrechten Trennelemente (5) zu lagern.

## Revendications

1. Système de séparateur pour maillons de chaîne en acier des chaînes d'énergie en acier, dont les dits maillons de chaîne (1) comprennent au moins deux maillons latéraux (11), au moins une traverse (6) supérieure et inférieure, le système de séparateur comprenant au moins deux séparateurs horizontaux (4) et au moins deux séparateurs verticaux (5) réciproquement indépendants, moyens (12, 14) pour bloquer les dits séparateurs horizontaux (4) au dit maillon de chaîne (1), et moyens (18, 3) pour bloquer les dits séparateurs verticaux (5) au dit maillon de chaîne (1), **caractérisé en ce que** lesdits moyens de blocage (12, 14) sont si configurés, que le déplacement d'un seul élément (14) permet l'enlèvement contemporain de tous les dits séparateurs horizontaux (4) du côté intérieur de la chaîne, et lesdits moyens de blocage (18, 3) sont si configurés, que le déplacement d'un seul élément (18) permet l'enlèvement contemporain de tous lesdits séparateurs verticaux (5), lorsque la chaîne est en usage y compris câbles, tuyaux et flexibles.

2. Système de séparateur selon la revendication 1, dont l'enlèvement d'un ou plusieurs séparateurs horizontaux (4) est indépendant de l'enlèvement d'un ou plusieurs séparateurs verticaux (5).

3. Système de séparateur selon la revendication 1 et 2, dont lesdites traverses (6) comprennent au moins deux traverses supérieures et au moins deux traverses inférieures, et lesdits séparateurs verticaux (5) sont liés avec un autre support (10), apte pour soutenir lesdits séparateurs verticaux (5), de sorte que ces séparateurs sont indépendants des traverses (6).

4. Système de séparateur selon la revendication 3, dont lesdits séparateurs verticaux (5) sont soutenus aux deux extrémités terminales par supports (10) supérieurs et inférieurs, liés sur le côté intérieur du dit maillon de chaîne (1), et disposés parallèles à l'orientation des traverses (6), lesdits supports (10) comprenant trous passants (20) pour l'introduction des séparateurs verticaux (5), et un profil façonné (18) en fermant les côtés supérieurs et inférieurs des dits supports (10), par moyens de fermeture (3) sur le rayon extérieur de la chaîne.

5. Système de séparateur selon la revendication 4, dont lesdits séparateurs verticaux (5) sont extraits par le côté extérieur du dit maillon de chaîne (1), en ouvrant seulement un des dits supports (10) et enlevant le dit profil façonné (18) faisant la fonction de couvercle pour lesdits supports (10).

6. Système de séparateur selon les revendications 1 et 2, dont lesdits séparateurs horizontaux (4) et lesdits séparateurs verticaux (5) ont une forme cylindrique et creuse.

7. Système de séparateur selon les revendications précédentes, comprenant une barre de support (21) liée aux dits supports (10) inférieurs et supérieurs, ayant des sièges pour l'introduction et le soutien structural des dits séparateurs horizontaux (4).

8. Système de séparateur selon les revendications précédentes, dont lesdits moyens de blocage (12, 14) comprennent au moins une bande (14) coulissante dans un dispositif correspondant de blocage (12), la dite bande (14 étant liée à son tour avec un moyen de déblocage (15) formé par un levier (15) en fermant tous les sièges (13) du dit dispositif de blocage (12), les dits sièges étant configurés pour loger les extrémités des dits séparateurs horizontaux (4).

9. Système de séparateur selon la revendication 1, dont lesdits séparateurs horizontaux (4) et lesdits séparateurs verticaux (5) sont insérés ensemble, comme système complémentaire dans les maillons de chaîne (1).

10. Maillon (1) pour chaîne d'énergie, muni d'un système de séparateurs (4,5), selon une ou plusieurs des revendications 1 - 8, comprenant au moins deux maillons latéraux (11), **caractérisé en ce que** le dit maillon (1) comprend au moins deux traverses supérieures (6) et au moins deux traverses inférieures (6), pour stabiliser la structure du dit maillon (1).

11. Maillon (1) pour chaîne d'énergie selon la revendication 10, dont lesdites traverses (6) supérieures et inférieures, sont disposées aux côtés des dits supports (10), pour loger lesdits séparateurs verticaux (5).
